(19) **Europäisches Patentamt**
**European Patent Office**
**Office européen des brevets**

(11) **EP 2 613 034 B1**

(12) **EUROPEAN PATENT SPECIFICATION**

(45) Date of publication and mention
of the grant of the patent:
**22.03.2017 Bulletin 2017/12**

(51) Int Cl.:
*F02C 3/22* *(2006.01)*    *F02C 3/24* *(2006.01)*
*F02C 3/30* *(2006.01)*    *F02C 9/40* *(2006.01)*

(21) Application number: **13150290.8**

(22) Date of filing: **04.01.2013**

(54) **Method for operating a gas turbine and control device**

Verfahren zum Betrieb einer Gasturbine sowie Regelungsvorrichtung

Procédé d'exploitation d'une turbine à gaz et appareil de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.01.2012 CH 272012**

(43) Date of publication of application:
**10.07.2013 Bulletin 2013/28**

(73) Proprietor: **General Electric Technology GmbH
5400 Baden (CH)**

(72) Inventors:
• **Schell, Susanne Renate
5400 Baden (CH)**

• **Meeuwissen, Thiemo
5408 Ennetbaden (CH)**

(74) Representative: **Bernotti, Andrea et al
Studio Torta S.p.A.
Via Viotti, 9
10121 Torino (IT)**

(56) References cited:
**EP-A1- 0 314 112      EP-A1- 2 299 091
EP-A2- 1 132 593      EP-A2- 2 390 481
WO-A1-2010/070692    US-A1- 2003 217 555**

**Description**

FIELD OF APPLICATION OF THE INVENTION

The present invention relates to a method for operating a gas turbine which is optionally operated with a gaseous fuel, such as natural gas, and/or with a liquid fuel, such as oil, wherein a change between an operation with the gaseous fuel and an operation with the liquid fuel is undertaken during load operation of the gas turbine, and wherein at least the operation with the liquid fuel is carried out with water addition.

BACKGROUND OF THE INVENTION

It is a sufficiently known measure in the field of modern gas turbine technology to operate the burners of the gas turbine with a gaseous fuel and/or with a liquid fuel.
Furthermore, it is known to add water to the fuel flow in the interests of reducing combustion instabilities and for reducing NOx emissions during operation of the gas turbine with liquid fuel.
US 2003/217555 discloses a dual fuel power generation system employing at least one gas turbine engine. A steam mixed liquid fuel and a gaseous fuel are delivered to the turbine engine via a common fuel controller, a common fuel distribution system and a common fuel nozzle. The operational concept comprises the steps of operating the turbine in a first mode, whereby the turbine is powered by combusting a first gaseous fuel, and operating the turbine in a second mode, whereby the turbine is powered by combusting a second gaseous fuel, this second gaseous fuel being a light hydrocarbon and steam.
EP 2390481 relates to flow control systems for power plants with one or more gas turbines and discloses a system for fuel and diluent flow control. The system comprises a fuel controller configured to control the fuel transition between a first flow of a first fuel and a second flow of a second fuel into a fuel nozzle and configured to adjust a third flow of a diluent in combination with the second fuel flow to maintain a predetermined pressure ratio across the fuel nozzle. By controlling the pressure ratio across the fuel nozzle via adjustment of the flow of the diluent an operation at a lower load is enabled and flashback is prevented.
Particular challenges are presented when the operation under load is to be changed over from the one fuel to the other fuel. A qualified controlling of the mass flows of the first fuel, of the second fuel and of the water is an essential precondition for maintaining the operation of the gas turbine during this phase.
In the case of a changeover from liquid fuel to gaseous fuel, the mass flow of the first fuel is continuously reduced during a transition phase with simultaneous continuous increase of the feed of gaseous fuel. A reduction of the water feed is required in parallel with this.
EP 2299091 discloses a method for switching over a gas turbine burner operation from liquid fuel to gaseous fuel and vice versa. The technical aim of the disclosed method is to eliminate significant pressure pulsations caused by flame instabilities during switching over from the one fuel to the other fuel. To provide a stable operation of a gas turbine combustor during switch over it is proposed to control the pilot gas fuel of the gas turbine burner at a substantially constant flow rate.
According to the solutions of the prior art, the water feed is controlled on the basis of the oil mass flow based on the ratio $\Omega$.
In this case, $\Omega$ is defined as the quotient of the mass flows of the water and of the liquid fuel according to the equation

$$\Omega = \dot{m}_{H2O} / \dot{m}_{oil} \qquad \text{equation 1.}$$

Furthermore, it is known to expand dividend and divisor of this basic equation, especially in dependence upon the design form of the gas turbine with fixed factors for the purpose of determining a normalized ratio $\Omega$. From this follows the equation

$$\Omega_{norm} = \dot{m}_{H2O} * LHV_{norm} / \dot{m}_{oil} * LHV_{oil} \qquad \text{equation 2.}$$

It is readily obvious that controlling of the water feed on the basis of equations 1 and 2 is stretched to its limits as oil mass flow decreases. With increasing approximation of the divisor $\dot{m}_{oil}$ to zero, the equations are undefined. For switching from liquid fuel to gaseous fuel, the aforesaid equations cannot therefore be used as a calculation basis for the water feed, at least during the final phase, since phasewise unfavorable operating parameters would ensue. This interrelationship is obvious.

In the opposite case, that is to say during switching from gaseous fuel to liquid fuel, this problem similarly exists, but in that case in the starting phase with incipient oil feed.

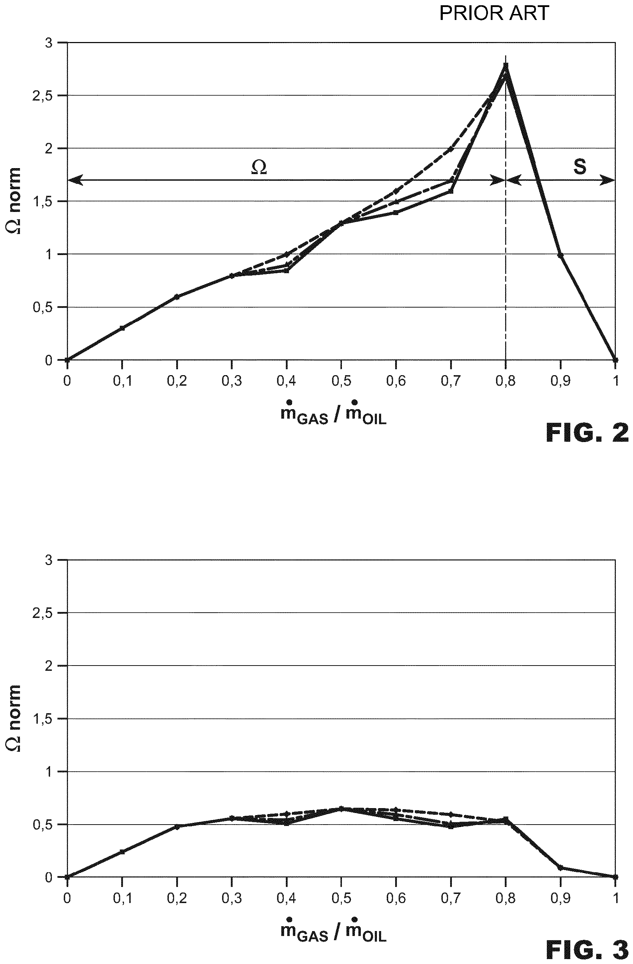

As is known, this phenomenon is countered by means of an operating principle which is apparent from Fig. 2, in which the $\Omega$-based operating principle is not maintained during the entire transition phase but only as long as a sufficiently large oil mass flow is fed. After this, a switch is made to another operating control in the form of a step-by-step reduction of the water addition. The limit value, at which a switch is made from the one operating control to the other, customarily lies at a mass flow ratio of about 0.8 between gaseous fuel and liquid fuel. Above this limit value, a step-by-step reduction of the water addition is carried out according to a transfer function up to zero or up to a plant-specific minimum flow.

In this operating regime according to the prior art, it is disadvantageous that certain parameters do not behave continuously during the transition but are subjected to certain discontinuities.

## SUMMARY OF THE INVENTION

It is therefore the object of the present invention to create a method for operating a gas turbine, which overcomes the disadvantages of the previously referred to prior art and to create an improved operation during the changeover from a liquid fuel to a gaseous fuel and vice versa, which operation is distinguished by a high continuity and without abrupt change of the relevant operating parameters.

This object is achieved by means of a method for operating a gas turbine according to the way referred to the independent claim 1. Further embodiments and advantageous developments of the invention are to be gathered from the dependent claims and from the description.

The invention includes the technical doctrine that the ratio of the added water mass flow to the fuel mass flow during the transition phase is determined according to the following relationship:

$$\Omega_{norm} = \frac{\dot{m}_{H_2O} \cdot LHV_{norm}}{\dot{m}_{gas} \cdot LHV_{gas} + \dot{m}_{oil} \cdot LHV_{oil}} \qquad \text{equation 3.}$$

The invention is based in this case on the idea of no longer defining the water mass flow which is to be fed solely on the basis of the equivalent output ($\dot{m}_{oil}$* $LHV_{oil}$ [MJ/s]) from the supplied oil mass flow but on the basis of the thermal output which is introduced overall by the two fuels, by a further parameter being additionally incorporated into the divisor of equation 2, specifically the thermal output ($\dot{m}_{gas}$* $LHV_{gas}$ [MJ/s]) which is introduced by the gaseous fuel. By means of this measure, the divisor of the equation going to zero and the quotient being therefore undefined is superficially avoided.

A number of advantages are surprisingly associated with controlling the water addition on the basis of equation 3. For one thing, the effect of an excessive water mass flow ensuing towards the end of the transition phase is avoided. For another thing, according to this a changeover to another transfer function is no longer necessary, as is absolutely necessary in the case of the known method on the basis of equation 2, and the definition of a limit value of the fuel mass flow ratio for the transition to the second transfer function is dispensed with.

All this significantly reduces the controlling cost for the operating regime of the fuel change.

Furthermore, the continuity of the method is increased.

In addition, the present invention is directed to a control device according to claim 7 for controlling the operation of a gas turbine, wherein the control device is designed and adapted so as to perform the steps of said method.

## PREFERRED EMBODIMENTS OF THE INVENTION

Further embodiments and advantages of the invention are subsequently explained in more detail based on an exemplary embodiment in conjunction with the figures. In the drawing:

Figure 1    shows a schematic view of a gas turbine with a gaseous fuel feed, an oil fuel feed and a water feed for operation of said gas turbine,

Figure 2    shows a graphical representation with a water mass flow ratio which is determined according to the prior art,

Figure 3    shows a graphical representation with a water mass flow ratio which is determined according to the present invention, and

Figure 4    shows a view of the mass flows and of the mass flow ratio during the change between two operating modes of the gas turbine.

Figure 1 shows in a schematic view a gas turbine 10 which can be operated with a gaseous fuel A consisting of a gaseous mass flow and/or with an oil fuel B consisting of an oil mass flow. The feed of the gaseous fuel A and of the oil fuel B is indicated schematically. During steady-state operation, the gas turbine 10 is operated preferably either only with gaseous fuel A or only with oil fuel B.

Without significantly altering the turbine output power L of the gas turbine 10, a change of the operating mode can be undertaken during load operation of the turbine. In this case, for example a changeover can be made from operation of the gas turbine 10 with gaseous fuel A to operation of the gas turbine 10 with oil fuel B.

At least during the phase of the change from fuel A to fuel B, but also in conjunction with the steady-state operation of the gas turbine 10 with oil fuel B, a water addition 11 is provided for operation of the gas turbine 10 so that in addition to the feed of oil fuel B a water mass flow is added to the gas turbine 10. During the change from the operating mode with gaseous fuel A to the operating mode with oil fuel B the water mass flow $\dot{m}_{H2O}$ is preferably activated before feeding the oil mass flow $\dot{m}_{oil}$. The mass flow of gaseous fuel A is indicated by $\dot{m}_{gas}$ in this case, and the mass flow of oil fuel is indicated by $\dot{m}_{oil}$. The water addition is referred to as water mass flow $\dot{m}_{H2O}$.

According to an preferred embodiment the gas turbine 10 has a guide vane arrangement, wherein the position of the guide vanes remains unchanged during the change between the operating mode with gaseous fuel A and the operating mode with oil fuel B.

Figure 2 shows a method for operating a gas turbine 10 with a water mass flow ratio $\Omega$ of the added water mass flow $\dot{m}_{H2O}$, wherein the water mass flow ratio $\Omega_{norm}$ is determined by equation 2, which reproduces the prior art.

Shown in Figure 2 is the change from an operating mode of the gas turbine 10 with an oil fuel B to an operating mode of the gas turbine 10 with a gaseous fuel A. The fuel mass ratio $\dot{m}_{gas} / \dot{m}_{oil}$ is plotted on the abscissa, and the ordinate shows the water mass flow ratio $\Omega$, as is determined from equation 2.

With a fuel mass ratio of $0 <= \dot{m}_{gas} / \dot{m}_{oil} <= 0.8$, the addition of the water is carried out in a known manner during an Omega-controlled operating mode ($\Omega$). As a result of the diminishing oil mass flow $\dot{m}_{oil}$, which is in the denominator of equation 2, the water mass flow $\dot{m}_{H2O}$ steadily increases, and water mass flow ratios $\Omega$ of over 2.5 are achieved, as in the case of a fuel mass ratio $\dot{m}_{gas} / \dot{m}_{oil}$ of 0.8, for example. With a further increase of the fuel mass ratio $\dot{m}_{gas} / \dot{m}_{oil}$ above 0.8, the volume of injected water would sharply increase according to equation 2 so that the operating mode in the form of the known step-controlled operating mode (S) is undertaken, and the water mass flow is slowly regulated down. As a result, an unfavorable characteristic curve of the water mass flow ratio $\Omega$ ensues, especially since the water mass flow can rise sharply during the change from the operating mode with oil fuel B to the operating mode with gaseous fuel A.

Figure 3 shows the characteristic curve of the water mass flow ratio $\Omega$ against the fuel mass ratio $\dot{m}_{gas} / \dot{m}_{oil}$, and the water mass flow ratio $\Omega$ is determined according to the invention by means of equation 3.

The water mass flow ratio $\Omega$ does not rise above the value of 1. Preferably, the water mass flow ratio $\Omega$ does not rise above the value of 0.7 and especially not above the value of 0.6. In the depicted operating modes, in which the gas turbine 10 is operated either only with gaseous fuel A or only with oil fuel B, no water addition 11 is carried out, as also shown in Figure 2 according to the prior art. In this respect, it should be noted that operating modes of gas turbines 10 without water addition 11 are also known. However, water addition 11 is provided if a change between operating modes with gaseous fuel A and oil fuel B is carried out. Consequently, the water mass flow ratio $\Omega$ is shown with the value of zero both during an operation which is based only on gaseous fuel A, and the water mass flow ratio $\Omega$ has the value of zero if the gas turbine 10 is operated only with oil fuel B.

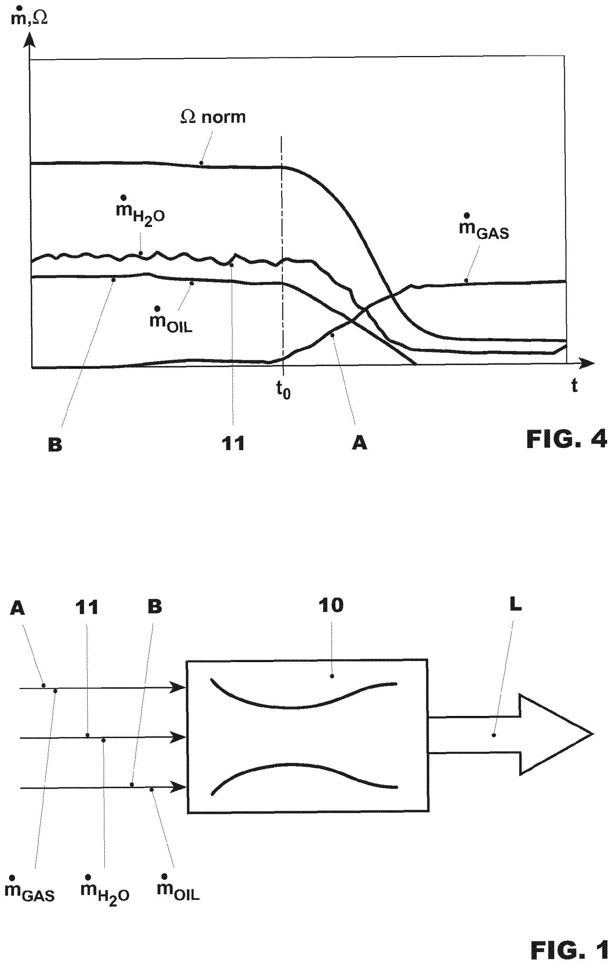

Figure 4 finally shows the characteristic curve of the water mass flow ratio $\Omega$ as a function of the oil mass flow $\dot{m}_{oil}$ and of the gaseous mass flow $\dot{m}_{gas}$. At the time point $t_0$ of commencement of the changeover, the oil mass flow $\dot{m}_{oil}$ is reduced and the gaseous mass flow $\dot{m}_{gas}$ is activated. Consequently, at the time point $t_0$ the oil mass flow $\dot{m}_{oil}$ decreases and the gaseous mass flow $\dot{m}_{gas}$ increases. The operating mode with oil fuel B is provided with water addition 11, and in the field before the time point $t_0$, in which the gas turbine 10 is operated with oil fuel B, the water mass flow $\dot{m}_{H2O}$ is approximately constant.

Consequently, a depicted characteristic curve of the water mass flow ratio $\Omega$ ensues, having a constant value up to the time point $t_0$ at which the change of the operating mode from oil fuel B to the operating mode with gaseous fuel A is carried out. The water mass flow ratio $\Omega$ therefore continuously decreases so that the water addition 11 can be zero if the gas turbine 10 is operated only with gaseous fuel A.

The invention in its embodiment is not limited to the previously disclosed preferred exemplary embodiment. On the contrary, a number of variants, which make use of the described solution, even with basically different embodiments, are conceivable.

**List of designations**

| | |
|---|---|
| 10 | Gas turbine |
| 11 | Water addition |
| A | Gaseous fuel |
| B | Oil fuel |
| L | Turbine output power |
| $t_0$ | Time point of commencement of changeover |

| | |
|---|---|
| $\Omega, \Omega_{norm}$ | Water mass flow ratio |
| $\dot{m}_{H2O}$ | Water mass flow |
| $\dot{m}_{oil}$ | Oil mass flow |
| $\dot{m}_{gas}$ | Gaseous mass flow |
| $LHV_{oil}$ | Lower calorific value of oil |
| $LHV_{gas}$ | Lower calorific value of gas |
| $LHV_{norm}$ | Normalized calorific value |
| $\Omega$ | Omega-controlled operating mode |
| S | Step-controlled operating mode |

**Claims**

1. A method for operating a gas turbine (10), which is operated with a gaseous fuel (A) consisting of a gaseous mass flow ($\dot{m}_{gas}$) and/or with an oil fuel (B) consisting of an oil mass flow ($\dot{m}_{oil}$), wherein a change between an operating mode with gaseous fuel (A) and an operating mode with oil fuel (B) is undertaken during load operation of the gas turbine (10), and wherein a water addition (11) of a water mass flow ($\dot{m}_{H2O}$) is provided at least in the operating mode with oil fuel (B),

   **characterized in that** the ratio ($\Omega_{norm}$) of the added water mass flow ($\dot{m}_{H2O}$) to the fuel mass flow during the change between operating modes is determined according to

$$\Omega_{norm} = \frac{\dot{m}_{H2O} \cdot LHV_{norm}}{\dot{m}_{gas} \cdot LHV_{gas} + \dot{m}_{oil} \cdot LHV_{oil}}$$

   wherein $LHV_{norm}$ indicates the normalized calorific value.

2. The method as claimed in claim 1, **characterized in that** the water mass flow ratio ($\Omega_{norm}$) is provided during the change from the operating mode with gaseous fuel (A) to the operating mode with oil fuel (B).

3. The method as claimed in claim 1, **characterized in that** the water mass flow ratio ($\Omega_{norm}$) is provided during the change from the operating mode with oil fuel (B) to the operating mode with gaseous fuel (A).

4. The method as claimed in claim 2, **characterized in that** during the change from the operating mode with gaseous fuel (A) to the operating mode with oil fuel (B) the water mass flow ($\dot{m}_{H2O}$) is activated before feeding the oil mass flow ($\dot{m}_{oil}$).

5. The method as claimed in one of the aforesaid claims, **characterized in that** the gas turbine (10) has a guide vane arrangement, wherein the position of the guide vanes remains unchanged during the change between the operating mode with gaseous fuel (A) and the operating mode with oil fuel (B).

6. The method as claimed in claim 2, **characterized in that** the water mass flow ratio ($\Omega_{norm}$) during the changeover from the operating mode with gaseous fuel (A) to the operating mode with oil fuel (B) has a value of 1 maximum, especially of 0.7 maximum and preferably of 0.6 maximum.

7. A control device for controlling the operation of a gas turbine (10), wherein the control device is designed especially for controlling a water addition (11) for the operation of the gas turbine (10), wherein the gas turbine (10) can be operated with a gaseous fuel (A) consisting of a gaseous mass flow ($\dot{m}_{gas}$) and/or with an oil fuel (B) consisting of an oil mass flow ($\dot{m}_{oil}$), wherein a change between an operating mode with gaseous fuel (A) and an operating mode with oil fuel (B) is undertaken during load operation of the gas turbine (10), and wherein the water addition (11) of a water mass flow ($\dot{m}_{H2O}$) is provided at least in the operating mode with oil fuel (B),
**characterized in that** the control device is designed and adapted so as to perform the steps mentioned in claim 1 .

**Patentansprüche**

1.  Verfahren für den Betrieb einer Gasturbine (10), die mit einem gasförmigen Brennstoff (A), der aus einem gasförmigen Massenstrom ($\dot{m}_{Gas}$) und/oder mit einem Ölbrennstoff (B), der aus einem Öl-Massenstrom ($\dot{m}_{Öl}$) besteht, betrieben wird, wobei ein Wechsel zwischen einem Betriebsmodus mit gasförmigem Brennstoff (A) und einem Betriebsmodus mit Ölbrennstoff (B) während des Lastbetriebs der Gasturbine (10) vollzogen wird und wobei eine Wasserzugabe (11) eines Wasser-Massenstroms ($\dot{m}_{H2O}$) zumindest in dem Betriebsmodus mit Öl Brennstoff (B) vorgesehen ist,
    **dadurch gekennzeichnet, dass** das Verhältnis ($\Omega_{norm}$) des hinzugefügten Wasser-Massenstroms ($\dot{m}_{H2O}$) zu dem Brennstoff-Massenstrom während des Wechsels zwischen den Betriebsmodi gemäß

$$\Omega_{\mathrm{norm}} \;=\; \frac{\dot{m}_{H_2O} \cdot LHV_{norm}}{\dot{m}_{Gas} \cdot LHV_{Gas} + \dot{m}_{Öl} \cdot LHV_{Öl}}$$

    bestimmt wird, worin LHV$_{norm}$ den normalisierten Brennwert bezeichnet.

2.  Verfahren nach Anspruch 1, **dadurch gekennzeichnet, dass** das Wasser-Massenstromverhältnis ($\Omega_{norm}$) während des Wechsels von dem Betriebsmodus mit gasförmigem Brennstoff (A) zu dem Betriebsmodus mit Ölbrennstoff (B) bereitgestellt wird.

3.  Verfahren nach Anspruch 1, **dadurch gekennzeichnet, dass** das Wasser-Massenstromverhältnis ($\Omega_{norm}$) während des Wechsels von dem Betriebsmodus mit Ölbrennstoff (B) zu dem Betriebsmodus mit gasförmigem Brennstoff (A) bereitgestellt wird.

4.  Verfahren nach Anspruch 2, **dadurch gekennzeichnet, dass** während des Wechsels von dem Betriebsmodus mit gasförmigem Brennstoff (A) zu dem Betriebsmodus mit Ölbrennstoff (B) der Wasser-Massenstrom ($\dot{m}_{H2O}$) aktiviert wird, bevor der Öl-Massenstrom ($\dot{m}_{Öl}$) eingespeist wird.

5.  Verfahren nach einem der vorstehenden Ansprüche, **dadurch gekennzeichnet, dass** die Gasturbine (10) eine Leitschaufelanordnung hat, wobei die Position der Leitschaufeln während des Wechsels zwischen dem Betriebsmodus mit gasförmigem Brennstoff (A) und dem Betriebsmodus mit Ölbrennstoff (B) unverändert bleibt.

6.  Verfahren nach Anspruch 2, **dadurch gekennzeichnet, dass** das Wasser-Massenstromverhältnis ($\Omega_{norm}$) während des Wechsels von dem Betriebsmodus mit gasförmigem Brennstoff (A) zu dem Betriebsmodus mit Ölbrennstoff (B) einen Wert von maximal 1, insbesondere maximal 0,7 und bevorzugt maximal 0,6 hat.

7.  Regelvorrichtung zur Regelung des Betriebs einer Gasturbine (10), wobei die Regelvorrichtung insbesondere für die Regelung einer Wasserzugabe (11) für den Betrieb der Gasturbine (10) konstruiert ist, wobei die Gasturbine (10) mit einem gasförmigen Brennstoff (A), der aus einem gasförmigen Massenstrom ($\dot{m}_{Gas}$) besteht, und/oder mit einem Ölbrennstoff (B), der aus einem Öl-Massenstrom ($\dot{m}_{Öl}$) besteht, betrieben werden kann, wobei ein Wechsel zwischen einem Betriebsmodus mit gasförmigem Brennstoff (A) und einem Betriebsmodus mit Ölbrennstoff (B) während des Lastbetriebs der Gasturbine (10) vollzogen wird und wobei die Wasserzugabe (11) eines Wasser-Massenstroms ($\dot{m}_{H2O}$) zumindest in dem Betriebsmodus mit Ölbrennstoff (B) vorgesehen ist,
    **dadurch gekennzeichnet, dass** die Regelvorrichtung so konstruiert und angepasst ist, dass sie die in Schritt 1 genannten Schritte ausführt.

**Revendications**

1. Procédé destiné à actionner une turbine à gaz (10), qui est actionnée avec un combustible gazeux (A) qui se compose d'un écoulement en masse de gaz ($\dot{m}_{gas}$) et / ou avec un combustible liquide (B) qui se compose d'un écoulement en masse de pétrole ($\dot{m}_{oil}$), dans lequel un changement entre un mode d'actionnement avec le combustible gazeux (A) et un mode d'actionnement avec le combustible liquide (B) est exécuté au cours d'une opération de chargement de la turbine à gaz (10), et dans lequel un ajout d'eau (11) qui présente un écoulement en masse d'eau ($\dot{m}_{H2O}$) est prévu au moins dans le mode d'actionnement avec le combustible liquide (B) ; **caractérisé en ce que** le rapport ($\Omega_{norm}$) de l'écoulement en masse d'eau ajoutée ($\dot{m}_{H2O}$) sur l'écoulement en masse de pétrole au cours du changement entre les modes d'actionnement est déterminé selon la formule :

$$\Omega_{norm} = \frac{\dot{m}_{H_2O} \cdot LHV_{norm}}{\dot{m}_{gas} \cdot LHV_{gas} + \dot{m}_{oil} \cdot LHV_{oil}}$$

dans laquelle $LHV_{norm}$, représente la capacité calorifique normalisée.

2. Procédé selon la revendication 1, **caractérisé en ce que** le rapport de l'écoulement en masse d'eau ($\Omega_{norm}$) est fourni au cours du changement à partir du mode d'actionnement avec le combustible gazeux (A) vers le mode d'actionnement avec le combustible liquide (B).

3. Procédé selon la revendication 1, **caractérisé en ce que** le rapport de l'écoulement en masse d'eau ($\Omega_{norm}$) est fourni au cours du changement à partir du mode d'actionnement avec le combustible liquide (B) vers le mode d'actionnement avec le combustible gazeux (A).

4. Procédé selon la revendication 2, **caractérisé en ce que**, au cours du changement à partir du mode d'actionnement avec le combustible gazeux (A) vers le mode d'actionnement avec le combustible liquide (B), l'écoulement en masse d'eau ($\dot{m}_{H2O}$) est activé avant de fournir l'écoulement en masse de pétrole ($\dot{m}_{oil}$).

5. Procédé selon l'une quelconque des revendications précédentes, **caractérisé en ce que** la turbine à gaz (10) présente un agencement d'aubes de guidage, dans lequel la position des aubes de guidage demeure inchangée au cours du changement entre le mode d'actionnement avec le combustible gazeux (A) et le mode d'actionnement avec le combustible liquide (B).

6. Procédé selon la revendication 2, **caractérisé en ce que** le rapport de l'écoulement en masse d'eau ($\Omega_{norm}$) au cours du changement à partir du mode d'actionnement avec le combustible gazeux (A) vers le mode d'actionnement avec le combustible liquide (B), présente une valeur égale au maximum à 1, en particulier égale au maximum à 0,7 et de préférence égale au maximum à 0,6.

7. Dispositif de commande destiné à commander l'actionnement d'une turbine à gaz (10), dans lequel le dispositif de commande est conçu de manière particulière de façon à commander un ajout d'eau (11) pour l'actionnement de la turbine à gaz (10), dans lequel la turbine à gaz (10) peut être actionnée avec un combustible gazeux (A) qui se compose d'un écoulement en masse de gaz ($\dot{m}_{gas}$) et / ou avec un combustible liquide (B) qui se compose d'un écoulement en masse de pétrole ($\dot{m}_{oil}$), dans lequel un changement entre un mode d'actionnement avec le combustible gazeux (A) et un mode d'actionnement avec le combustible liquide (B), est exécuté au cours d'une opération de chargement de la turbine à gaz (10), et dans lequel l'ajout d'eau (11) d'un écoulement en masse d'eau ($\dot{m}_{H2O}$) est prévu au moins dans le mode d'actionnement avec le combustible liquide (B) ; **caractérisé en ce que** le dispositif de commande est conçu et adapté de façon à exécuter les étapes mentionnées dans la revendication 1.

PRIOR ART

**FIG. 2**

**FIG. 3**

FIG. 4

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003217555 A
- EP 2390481 A
- EP 2299091 A